# EUROPEAN PATENT APPLICATION

(11) **EP 3 072 412 A1**
(43) Date of publication of application: **28.09.2016**
(21) Application number: 16162043.0
(22) Date of filing: 23.03.2016
(51) Int. Cl.: A45C 11/00

(54) **A CASE FOR A MOBILE ELECTRONIC DEVICE**

(30) Priority: 25.03.2015 GB 201505017
(71) Applicant: Tech 21 Licensing Limited, Twickenham, Middlesex TW1 3DY (GB)
(72) Inventor: ROBERTS, Jason, Twickenham, Middlesex TW1 1QX (GB); MARSCHALL, Wilhelm, East Twickenham, Middlesex TW1 2QD (GB); THORPE, Benjamin, London, Greater London N19 3TJ (GB)
(74) Representative: Boult Wade Tennant

(57) **Abstract**

A case for a mobile electronic device comprising a one piece housing (1), the housing having a rear face (4) adjacent to which a battery (3) is housed. Upstanding side walls (5) extend away from all sides of the rear face to define a cavity for the phone and an opening in the front face of the housing surrounded by the side walls (5). The opening is large enough and the side walls (5) flexible enough to allow the mobile device to be inserted into the case via the front face.

## Description

The present invention relates to a case for a mobile electronic device. In particular, it relates to a case for a mobile electronic device which has an integral battery. Such a device may, for example, be a smart phone, tablet or e-reader.

Some mobile electronic devices such as popular smart phones, have a battery within the device which will typically last for a little more than a day if used intensively. For many users, particularly those who travel extensively, this is often not sufficient.

Given the value of a mobile device, the ease with which it can break if dropped and the relatively high cost of repair, it is common to encase the devices in a protective casing.

A number of products exist which address both of these concerns. In effect, these are cases which have an integral battery which sits on a rear wall of the case behind the mobile device which is placed in the case. These batteries are relatively large rigid components and the cases which accommodate these are relatively large and rigid. These relatively rigid materials are not ideal in terms of protecting the device for a number of reasons. Firstly, the rigid case provides poor impact protection in terms of its ability to absorb and dissipate any impact on the external surface of the case. The rigid material is itself relatively brittle and prone to cracking either when dropped or repeatedly reapplied to the device.

Because of the rigid nature of the case that is required for the battery, the cases are two part structures which are slid together from opposite ends of the device in order to fully encase the device. Such sliding structures are awkward to fit, often unsightly, and the engagement between the two halves can wear loose if repeatedly reapplied.

Other cases with batteries are known in which the case is open at one end so that the phone can be slid in in a direction coplanar to the battery. This again offers poor impact protection particularly adjacent to the end without the wall which remains unprotected.

According to the present invention a case for a mobile electronic device comprises a one piece housing, the housing having a rear face adjacent to which a battery is housed, upstanding side walls extending away from all sides of the rear face to define a cavity for the phone and an opening in the front face of the housing surrounding the side walls, the opening being large enough and the side walls being flexible enough to allow the mobile device to be inserted into the case via the front face.

This case, for the first time, combines the convenience of an integral battery with a case which can provide optimal impact protection. The edges of the device are the most vulnerable to being damaged when dropped and therefore the presence of the flexible walls allows a material with good impact absorption properties to be used for the walls in the region which surrounds the edge of the device. Because the side walls extend from all sides of the rear face, they offer protection to all edges of the device. The requirement for a one-piece housing does not mean that the housing is moulded from a single piece. It means only that the user is presented with a case in which there are no parts which require disassembly with respect to one another in order to insert the device.

The case preferably has a plug projecting inwardly from one of the side walls which will, in use, engage with a charging port in the electronic device. If the side walls are sufficiently flexible, it is possible that the device can be inserted into the case in a position in which the plug in the case is above the charging port. The resilience of the material of the side walls can then push the device fully onto the plug. However, preferably, the plug is mounted so as to be deflectable from a first orientation in which it is substantially parallel to the rear face to a second orientation in which it faces away from the rear face. The deflectable plug can be deflected to the second orientation to allow the charging port on the device to dock with the plug before the device has fully engaged with the side walls. The plug can then return to the first orientation as the device is fitted between the remaining side walls.

The deflectable mounting may take the form of the plug being pivotally mounted so as to rotate about an axis or being mounted to a resilient component which deforms.

The battery may be removable from the case so that it can be recharged separately from the case and replaced as necessary. However, preferably, the battery is irremovably sealed within a rear compartment in the case. The term "irremovably sealed" is used to denote the fact that a user cannot access the battery in normal use. Instead, in order to do so they would have to irreparably damage the casing material.

The battery may be any suitable battery including those known in the art. However, preferably, the battery is a lithium ceramic battery. Such a battery is available from ProLogium Technology Corporation. Such a battery is thin, flexible, leak-proof and not prone to overheating. It can therefore safely be incorporated into the case without unduly adding to the bulk of the case.

Preferably the maximum thickness of the case is 13mm.

The case may simply engage with the side walls of the device in order to retain it in place. However, preferably, the side walls have an inwardly projecting lip configured to engage with the upper peripheral surface of the device. Such an arrangement provides a more secure engagement with the device.

The side walls are preferably formed of a layer of flexible polymer. It may comprise a single material. However, preferably, a layer of damping material which is softer than the flexible polymer is provided within the flexible polymer layer. This damping material may have a plurality of protrusions projecting inwardly from a substantial portion of the inner periphery of the damping material to engage with the device. The protrusions are preferably arranged so that, in normal use, there is substantially no contact between the side walls with the protrusions and the device other than through the protrusions.

Preferably the damping material is provided with a plurality of outwardly projecting protrusions which are embedded in the flexible polymer material.

The rear face of the case may be of the same flexible material as the side walls. However, preferably, the rear face is made of a material which is more rigid than the side walls.

The battery may be exposed to the rear of the device. However, preferably a plate extends across the case to separate the battery from the device compartment. The plate is preferably made of a material which is more rigid than the side walls. Preferably the plate and rear wall form a sealed compartment for the battery.

An example of a case in accordance with the present invention will now be described with reference to the accompanying drawings, in which:
Fig. 1 is an exploded perspective view of the case and mobile device;
Fig. 2 is a side view of the case;
Fig. 3 is a perspective view of the front of the case with the device in place; and
Fig. 4 is a perspective view of the rear of the case with the device in place.

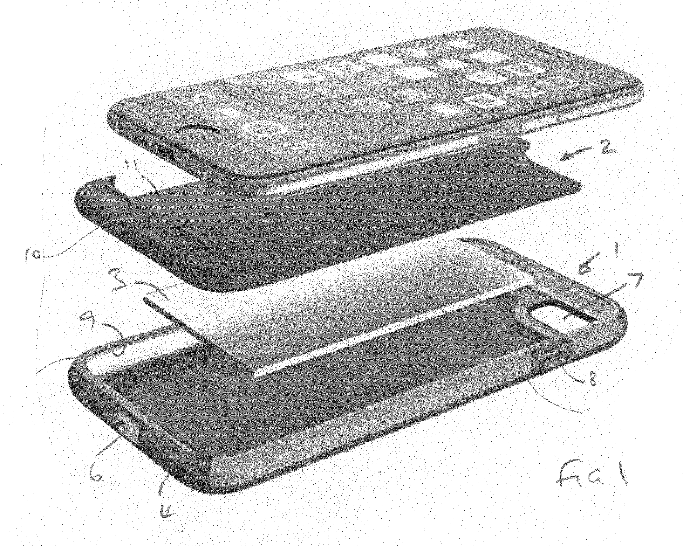

As best apparent from Fig. 1, the case is made of a main housing 1 and a base plate 2 between which a flat rectangular battery 3 is contained.

The main housing 1 has a generally rectangular configuration with a planar rear face 4 of a relatively hard material such as PC. The base place 2 is made of a similarly hard material. A number of upstanding side walls 5 surround the rear face 4. These are made of a softer material such as TPU. The outer wall may have an inner layer formed in a dual injection process or as an insert mould of a viscoelastic polymer which is softer than TPU (for example, a TPE such as Kraiburg Thermolast K or a PU foam such as BASF Elastoflex). The viscoelastic polymer layer may have a number of inwardly projecting ribs which project towards the device and may also have a number of outwardly projecting ribs which protect towards the outer layer. These assist with the dissipation of impact forces on the case.

The case has the usual orifices 6, 7 for device features such as a recharge plug and camera lens and is also provided with features 8 which allow access to various controls on the device. A lip 9 at the top of the side walls 5 will extend, in use, to a small extent across the face of the device. The present drawing shows a case for an i-Phone 6 but it will be readily appreciated that similar features should be provided depending upon the nature of the device.

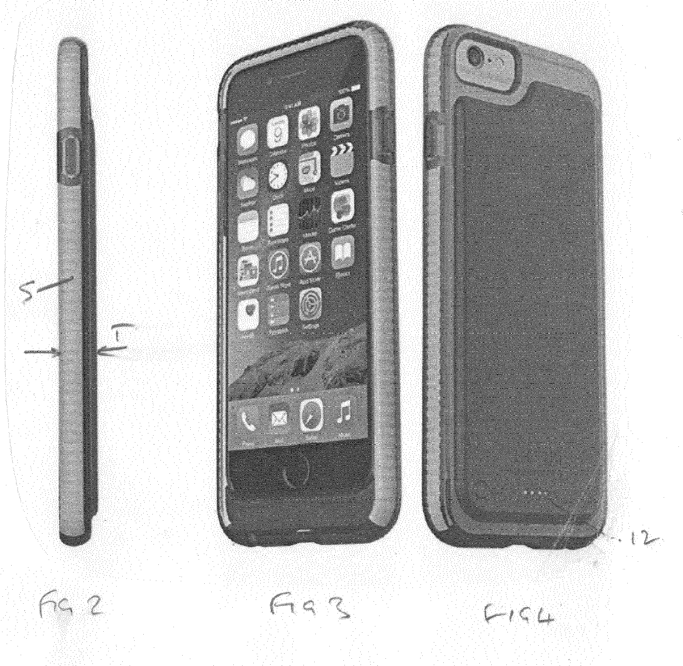

The battery 3 is a lithium ion battery which is accommodated between the rear face 4 and the base plate 2 such that the compartment housing the battery 3 is sealed off from the user. The base plate 2 has, at the end adjacent to the charging port of the phone, a housing 10 which fulfils a number of functions. This is a rigid structure which is shaped to fit around the lower edge of the device. It is, however, surrounded by the lower side wall 5 which protects it from impact. A plug 11 extends inwardly from the housing 10 and is configured to fit within the charging port of the device. The plug 11 may be mounted to a resilient portion of the housing 10 such that it can deflect from a normal in use position in which it projects generally parallel to the plane of the rear face to a plane facing away from the rear face. In this forward position, the device can be placed onto the plug 11 whereupon the device and the plug are both deflected downwardly into the case into the position shown in Fig. 3 where it is held by the side walls 5 and lip 9.

To remove the device, the side walls 5 can be peeled back from the top corners of the device and the device tilted forwards deflecting the plug 11 forwards until the device can be slid off from the plug 11.

Also within the housing is the control circuitry which determines the control strategy of the battery 3 as well as the battery in the device. For example the control circuitry will determine when the battery 3 is fully charged to switch off the charging process and will determine when to charge the device battery from the battery 3. There is also an electrical connection between the battery 3 and the housing 10. Lights 12 are provided on the rear of the case to show the charging level.

The housing 10 may be provided with a relatively large hole in the vicinity of the headphone socket of the device to allow access to the headphone socket. Alternatively, there may be a plug in the housing 10 which engages with the headphone socket in the device. This plug may be flexibly mounted in a similar way to the charging plug 11. There may then be a corresponding orifice in the housing 10 to receive the headphone plug in a manner which is electrically connected to the plug from the housing 10 into the device.

It will be appreciated particularly from Fig. 2 that a design using the lithium ceramic battery mounted as it is between two relatively thin layers of PC is a very low profile device. The thickness T of the case is preferably less than 13mm.

## Claims

1. A case for a mobile electronic device comprising a one piece housing, the housing having a rear face adjacent to which a battery is housed, upstanding side walls extending away from all sides of the rear face to define a cavity for the phone and an opening in the front face of the housing surrounded by the side walls, the opening being large enough and the side walls being flexible enough to allow the mobile device to be inserted into the case via the front face.

2. A case according to claim 1, further comprising a plug projecting inwardly from one of the side walls which will, in use, engage with a charging port in the electronic device.

3. A case according to claim 2, wherein the plug is mounted so as to be deflectable from a first orientation in which it is substantially parallel to the rear face to a second orientation in which it faces away from the rear face.

4. A case according to any one of the preceding claims, wherein the battery is irremovably sealed within a rear compartment in the case.

5. A case according to any one of the preceding claims, wherein the battery is a lithium ceramic battery.

6. A case according to any one of the preceding claims, wherein the maximum thickness of the case is 13mm.

7. A case according to any one of the preceding claims, wherein the side walls have an inwardly projecting lip configured to engage with the upper peripheral surface of the device.

8. A case according to any one of the preceding claims, wherein the side walls are formed of a layer of flexible polymer.

9. A case according to claim 8, wherein a layer of damping material which is softer than the flexible polymer is provided within the flexible polymer layer.

10. A case according to claim 9, wherein a plurality of protrusions projecting inwardly from a substantial portion of the inner periphery of the damping material to engage with the device.

11. A case according to claim 10, wherein arranged so that, in normal use, there is substantially no contact between the side walls with the protrusions and the device other than through the protrusions.

12. A case according to claims 9 to 11, wherein the damping material is provided with a plurality of outwardly projecting protrusions which are embedded in the flexible polymer material.

13. A case according to any one of the preceding claims, wherein the rear face is made of a material which is more rigid than the side walls.

14. A case according to any one of the preceding claims, wherein a plate extends across the case to separate the battery from the device compartment.

## Amended claims

### Amended claims in accordance with Rule 137(2) EPC.

1. A case for a mobile electronic device comprising a one piece housing, the housing having a rear face (4) adjacent to which a battery (3) is housed, upstanding side walls (5) extending away from all sides of the rear face to define a cavity for the phone and an opening in the front face of the housing surrounded by the side walls, the opening being large enough and the side walls (5) being flexible enough to allow the mobile device to be inserted into the case via the front face.

2. A case according to claim 1, further comprising a plug (11) projecting inwardly from one of the side walls which will, in use, engage with a charging port in the electronic device.

3. A case according to claim 2, wherein the plug (11) is mounted so as to be deflectable from a first orientation in which it is substantially parallel to the rear face to a second orientation in which it faces away from the rear face.

4. A case according to any one of the preceding claims, wherein the battery (3) is irremovably sealed within a rear compartment in the case.

5. A case according to any one of the preceding claims, wherein the battery (3) is a lithium ceramic battery.

6. A case according to any one of the preceding claims, wherein the maximum thickness of the case is 13mm.

7. A case according to any one of the preceding claims, wherein the side walls have an inwardly projecting lip (9) configured to engage with the upper peripheral surface of the device.

8. A case according to any one of the preceding claims, wherein the side walls (5) are formed of a layer of flexible polymer.

9. A case according to claim 8, wherein a layer of damping material which is softer than the flexible polymer is provided within the flexible polymer layer.

10. A case according to claim 9, wherein a plurality of protrusions projecting inwardly from a substantial portion of the inner periphery of the damping material to engage with the device.

11. A case according to claim 10, wherein arranged so that, in normal use, there is substantially no contact between the side walls (5) with the protrusions and the device other than through the protrusions.

12. A case according to claims 9 to 11, wherein the damping material is provided with a plurality of outwardly projecting protrusions which are embedded in the flexible polymer material.

13. A case according to any one of the preceding claims, wherein the rear face (4) is made of a material which is more rigid than the side walls (5).

14. A case according to any one of the preceding claims, wherein a plate (2) extends across the case to separate the battery (3) from the device compartment.
